# EUROPEAN PATENT APPLICATION

(11) **EP 4 772 471 A1**
(43) Date of publication of application: **08.07.2026**
(21) Application number: 24953740.8
(22) Date of filing: 03.09.2024
(51) Int. Cl.: C01B 32/16

(54) **CARBON NANOTUBE PRODUCTION DEVICE**

(71) Applicant: Dowa Thermotech Co., Ltd., Chiyoda-ku Tokyo 101-0021 (JP); Meijo Nano Carbon Co., Ltd., Nagoya-shi, Aichi 463-0018 (JP)
(72) Inventor: FUJITA, Takahiro, Tokyo 101-0021 (JP); HASHIMOTO, Takeshi, Nagoya-shi, Aichi 463-0018 (JP); TAKANO, Kei, Nagoya-shi, Aichi 463-0018 (JP)
(74) Representative: Müller-Boré & Partner Patentanwälte PartG mbB
(86) International application number: PCT/JP2024/031588
(87) International publication number: WO 2026/053280

(57) **Abstract**

A carbon nanotube production apparatus includes: a first reaction tube to which a raw material gas for a carbon nanotube is supplied; a second reaction tube through which the raw material gas passes; and a heating chamber which heats the first reaction tube and the second reaction tube, wherein: the first reaction tube and the second reaction tube are arranged in a straight line; and an end portion of the first reaction tube and an end portion of the second reaction tube are connected.

## Description

### TECHNICAL FIELD

The present invention relates to a carbon nanotube production apparatus which produces a carbon nanotube.

### BACKGROUND ART

A carbon nanotube (hereinafter, sometimes referred to as a "CNT") has excellent characteristics such as electrical conductivity, thermal conductivity, mechanical strength, and so on, and is thus a new material attracting attention in many fields. As a manufacturing apparatus for the CNT, there is a known manufacturing apparatus using the chemical vapor deposition method (CVD method) of producing the CNT by thermally decomposing a raw material containing carbon (carbon source) disclosed in

### Patent Document 1.

In a manufacturing method of the CNT using the chemical vapor deposition method, for example, a raw material for the CNT and a carrier gas are supplied into a reaction tube heated to a higher temperature and the raw material passes through the inside of the reaction tube for a certain time to produce the CNT. The produced CNT is discharged from an end portion of the reaction tube on a side opposite to the raw material supply side.

### PRIOR ART DOCUMENT

### PATENT DOCUMENT

Patent Document 1: Japanese Laid-open Patent Publication No. 2019-064918

### SUMMARY OF THE INVENTION

### PROBLEMS TO BE SOLVED BY THE INVENTION

To reduce the cost of manufacturing the CNT, it is necessary to increase the production amount of the CNTs per unit time to increase the manufacturing efficiency. A considerable method of increasing the production amount of the CNTs per unit time is, for example, increasing a raw material supply rate to a reaction tube.

However, if the production amount of the CNTs increases accompanying the increase in the raw material supply rate, clogging of the CNTs is likely to occur in the reaction tube, and therefore the flow rate of a carrier gas also needs to be increased together with the increase in the raw material supply rate in order to suppress the clogging of the CNTs.

On the other hand, to control the quality of the CNT to a target range, it is necessary to perform the production process of the CNT in an atmosphere set to a suitable condition for a suitable time. When the flow rate of the carrier gas was increased at a reaction tube length of a conventional apparatus, it was difficult to set the inside of the reaction tube to a suitable condition. Specifically, if the flow rate of the carrier gas is increased in the conventional apparatus, it is impossible to obtain the CNT of the target quality. Therefore, in order to obtain the CNT of the target quality even in the case where the flow rate of the carrier gas is increased, it is necessary to extend the reaction tube length according to the flow rate of the carrier gas.

However, there are some standards generally used for the reaction tube manufactured by the reaction tube manufacturers, and a huge cost is required for the case of manufacturing reaction tubes outside the standards Specifically, the use of a reaction tube longer than the reaction tube length of the standard product leads to a significant cost increase of the CNT production apparatus. Accordingly, in the conventional CNT production apparatus, there is room for improvement in terms of increasing the CNT production amount per unit time while ensuring the CNT quality.

The present invention has been made in consideration of the above circumstances, and its object is to provide a carbon nanotube production apparatus which increases a carbon nanotube production amount per unit time while ensuring the quality of a carbon nanotube.

### MEANS FOR SOLVING THE PROBLEMS

Aspects of the present invention solving the above problems are exemplified in the following.
(1) A carbon nanotube production apparatus for producing a carbon nanotube, the carbon nanotube production apparatus including:
   a first reaction tube to which a raw material gas for the carbon nanotube is supplied;
   a second reaction tube through which the raw material gas passes; and
   a heating chamber which heats the first reaction tube and the second reaction tube, wherein:
      the first reaction tube and the second reaction tube are arranged in a straight line; and
      an end portion of the first reaction tube and an end portion of the second reaction tube are connected.
(2) The carbon nanotube production apparatus according to (1), further including
   a connection member which connects the end portion of the first reaction tube and the end portion of the second reaction tube, wherein:
   the connection member includes:
   a first insertion port into which the end portion of the first reaction tube is inserted;
   a second insertion port into which the end portion of the second reaction tube is inserted; and
   an intermediate wall part provided between the first insertion port and the second insertion port,
   the intermediate wall part including:
      a first surface which faces an end surface of the first reaction tube and is parallel to the end surface;
      a second surface which faces an end surface of the second reaction tube and is parallel to the end surface; and
      a through hole which penetrates along a tube axis direction of the first reaction tube.
(3) The carbon nanotube production apparatus according to (2), further including
   a sealing material provided between the end surface of the first reaction tube and the intermediate wall part and/or between the end surface of the second reaction tube and the intermediate wall part.
(4) The carbon nanotube production apparatus according to (1), wherein:
   an end portion of the first reaction tube on the second reaction tube side has a first outside diameter part and a tubular second outside diameter part smaller in outside diameter than the first outside diameter part;
   an end portion of the second reaction tube on the first reaction tube side has a first inside diameter part and a tubular second inside diameter part larger in inside diameter than the first inside diameter part; and
   the second outside diameter part is inserted inside the second inside diameter part.
(5) The carbon nanotube production apparatus according to (4), further including
   a sealing material which is provided between an end surface of the first outside diameter part and an end surface of the second inside diameter part.
(6) The carbon nanotube production apparatus according to (3) or (5), wherein
   the sealing material is formed of graphite.
(7) The carbon nanotube production apparatus according to any one of (3), (5), and (6), further including
   a pressing mechanism which makes the first reaction tube and the second reaction tube relatively approach each other to bring the first reaction tube and the second reaction tube into close contact with each other via the sealing material.
(8) The carbon nanotube production apparatus according to (7), wherein:
   an end portion of the first reaction tube on a side opposite to the second reaction tube side is located outside the heating chamber; and
   the pressing mechanism includes:
      a spring which expands and contracts in a direction parallel to the tube axis direction of the first reaction tube;
      a first member to which one end portion of the spring is fixed; and
      a second member to which another end portion of the spring is fixed,
      the first member being fixed to the first reaction tube,
      the second member being fixed to the heating chamber, and
      the spring, in a state of being contracted from a natural length, being fixed to the second member in a region on a side opposite to a region on the second reaction tube side with respect to the first member.
(9) The carbon nanotube production apparatus according to (8), wherein
   the second member is a bar material inserted into the spring.
(10) The carbon nanotube production apparatus according to (8) or (9), further including
   an adjustment mechanism which adjusts a contraction amount of the spring.
(11) The carbon nanotube production apparatus according to (9), wherein:
   the bar material has a male threaded part;
   a nut is attached to the male threaded part;
   the spring is arranged between the nut and the first member; and
   a configuration which is capable of adjusting a contraction amount of the spring by rotation of the nut is provided.
(12) The carbon nanotube production apparatus according to any one of (1) to (11), wherein
   each of an end surface of the first reaction tube and an end surface of the second reaction tube at a connection portion of the first reaction tube and the second reaction tube has an arithmetic mean roughness Ra of 0.2 to 6.3 µm.

### EFFECT OF THE INVENTION

According to the present invention, it is possible to provide a carbon nanotube production apparatus which increases a carbon nanotube production amount per unit time while ensuring the quality of a carbon nanotube.

### BRIEF DESCRIPTION OF THE DRAWINGS

FIG. 1 is an explanatory view illustrating a schematic configuration of a carbon nanotube manufacturing apparatus according to an embodiment.
FIG. 2 is an explanatory view illustrating a schematic configuration of a carbon nanotube production apparatus according to an embodiment.
FIG. 3 is a perspective view illustrating a connection portion of a first reaction tube and a second reaction tube.
FIG. 4 is a view for explaining a connection structure of the first reaction tube and the second reaction tube.
FIG. 5 is an explanatory view illustrating a schematic configuration of a pressing mechanism which presses the first reaction tube downward.
FIG. 6 is an explanatory view illustrating another example of the connection structure of the first reaction tube and the second reaction tube.
FIG. 7 is an explanatory view illustrating another example of the connection structure of the first reaction tube and the second reaction tube.
FIG. 8 is an explanatory view illustrating another example of the connection structure of the first reaction tube and the second reaction tube.

### EMBODIMENTS FOR CARRYING OUT INVENTION

Hereinafter, embodiments of the present invention will be explained while referring to the drawings. Note that in the present description and the drawings, components having substantially the same functional configurations are denoted by the same reference numerals to omit overlapping explanation.

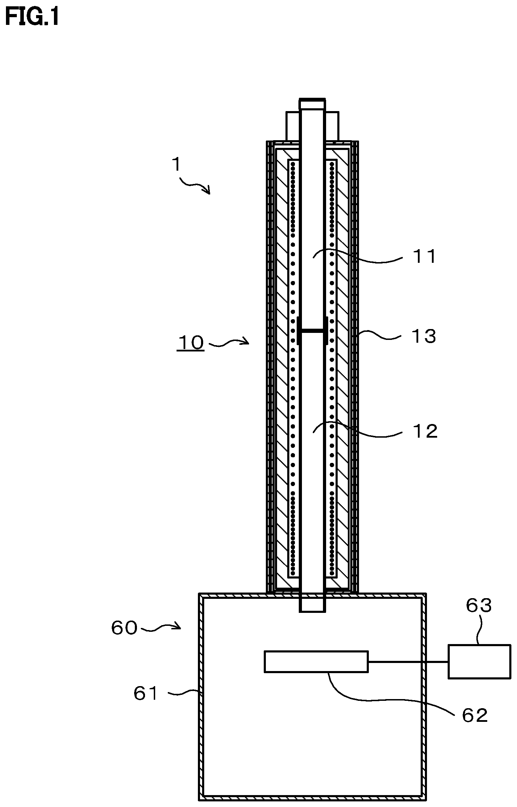

FIG. 1 is an explanatory view illustrating a schematic configuration of a CNT manufacturing apparatus 1 which manufactures a carbon nanotube (hereinafter, referred to as a "CNT" in some cases) according to this embodiment. The CNT in this description is a tube-like carbon allotrope (typically, a cylindrical structure with a graphite structure), and includes a so-called single-walled CNT, multi-walled CNT, or carbon nanohorn having a horn-shaped tube tip. The CNT manufacturing apparatus 1 is preferably used particularly for the manufacture of the single-walled CNT.

The CNT manufacturing apparatus 1 has a CNT production apparatus 10 which produces a CNT and a collection apparatus 60 which collects the CNT.

The collection apparatus 60 is connected to a lower end portion of the CNT production apparatus 10. The collection apparatus 60 includes a collection room 61, a roller 62 installed in the collection room 61, and a motor 63 which rotates the roller 62. The CNT produced in the CNT production apparatus 10 is wound around the rotating roller 62 into a massive wound body. The wound body reaching a predetermined size falls from the roller 62 into the collection room 61 by a not-illustrated separation mechanism, and is then collected.

### <Carbon nanotube production apparatus>

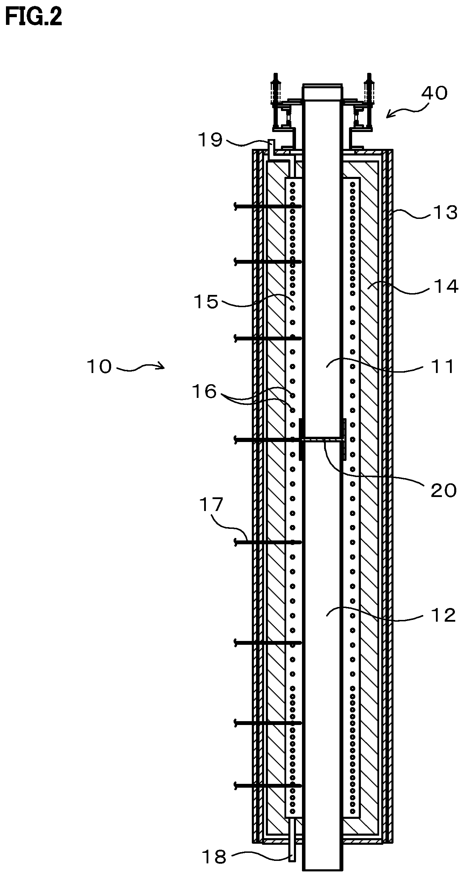

FIG. 2 is an explanatory view illustrating a schematic configuration of the CNT production apparatus 10 according to this embodiment. The CNT production apparatus 10 is an apparatus which produces the CNT using the chemical vapor deposition method (CVD method) for producing the CNT by thermally decomposing a raw material such as a catalytic metal or a catalytic metal compound. Note that when the raw material for the CNT is supplied to the CNT production apparatus 10, a carrier gas (for example, a hydrogen gas) is also supplied together with the raw material. In this description, the raw material to be supplied together with the carrier gas is called a raw material gas.

The CNT production apparatus 10 includes a first reaction tube 11 to which the raw material gas for the CNT is supplied, a second reaction tube 12 connected to a lower end portion of the first reaction tube 11, and a heating chamber 13 for heating the first reaction tube 11 and the second reaction tube 12.

A tube axis of the first reaction tube 11 and a tube axis of the second reaction tube 12 are oriented vertically, and the first reaction tube 11 and the second reaction tube 12 are arranged in a straight line. In this embodiment, the reaction tubes 11 and 12 are arranged such that the tube axis direction of the first reaction tube 11 and the tube axis direction of the second reaction tube 12 coincide with each other.

An upper end portion of the first reaction tube 11 is located outside the heating chamber 13, and the upper end portion of the first reaction tube 11 is formed with a raw material supply port (not illustrated) for supplying the raw material gas for the CNT. The lower end portion of the first reaction tube 11 and an upper end portion of the second reaction tube 12 are connected to each other, so that the raw material gas for the CNT supplied to the first reaction tube 11 passes through the first reaction tube 11 and flows into the second reaction tube 12.

Though detailed explanation of a connection structure of the first reaction tube 11 and the second reaction tube 12 will be made later, a lower end surface of the first reaction tube 11 and an upper end surface of the second reaction tube 12 preferably have an arithmetic mean roughness Ra specified by JIS B 0601:2001 of 0.2 to 6.3 µm. This can enhance the sealing property at a connection portion of the first reaction tube 11 and the second reaction tube 12.

Each of the reaction tubes 11 and 12 is a straight tube body but the shape of each reaction tube 11, 12 is not particularly limited. Besides, the shape of each reaction tube 11, 12 in a cross section perpendicular to its tube axis may be a rounded shape such as a circular shape, an elliptical shape, or an ovoid shape, or a polygonal shape. The material of each reaction tube 11, 12 is appropriately selected in consideration of heat resistance against the heating temperature during the CNT production, thermal shock resistance, weather resistance against an atmosphere gas at that temperature, corrosion resistance, and so on. For example, alumina (Al₂O₃), mullite, silicon carbide (SiC), quartz glass, Kanthal (iron-chromium-aluminum alloy), Inconel, carbon, or the like is used.

The length of each reaction tube 11, 12 is, for example, 0.5 to 4.0 m, preferably 1.0 to 3.0 m, and more preferably 2.0 to 2.5 m. Further, the inside diameter of each reaction tube 11, 12 is, for example, 10 to 300 mm, preferably 50 to 200 mm, and more preferably 80 to 120 mm. Note that the number of the reaction tubes is not limited to two and may be three or more. Also in the case where there are three or more reaction tubes, the reaction tubes are arranged in a straight line.

The heating chamber 13 is, for example, a cylindrical housing, and a heat insulating material 14 is provided inside a wall surface of the heating chamber 13. Inside the heat insulating material 14 and around each reaction tube 11, 12, a space 15 is formed. In the space 15, a heater 16 for heating each reaction tube 11, 12 is installed.

The heater 16 is not particularly limited in shape and heating method as long as it can heat each reaction tube 11, 12 to a temperature suitable for the CNT production. For example, a tungsten heater capable of heating each reaction tube 11, 12 to 500°C to 2000°C or a carbon heater or silicon carbide heater (SiC heater) capable of heating each reaction tube 11, 12 to 600°C to 1600°C can be used as the heater 16.

A thermocouple 17 for measuring the temperature in the above space 15 is installed at a side wall portion of the heating chamber 13. A plurality of the thermocouples 17 are installed at intervals along a height direction of the heating chamber 13 and thereby can measure a temperature distribution in the tube axis direction of each reaction tube 11, 12.

At a bottom wall portion of the heating chamber 13, a shielding gas supply pipe 18 leading to the above space 15 is provided. To the shielding gas supply pipe 18, for example, an inert gas as a shielding gas is supplied to bring the inside of the space 15 into an inert gas atmosphere at the CNT production. At a ceiling wall portion of the heating chamber 13, an exhaust pipe 19 leading to the inside of the space 15 is provided, and the exhaust pipe 19 is connected, for example, to an exhaust system of a factory. Supply and exhaust of the inert gas are performed during the CNT production, and if the raw material gas leaks from a gap between the first reaction tube 11 and the second reaction tube 12, the raw material gas is exhausted from the exhaust pipe 19.

### (connection structure of the reaction tubes)

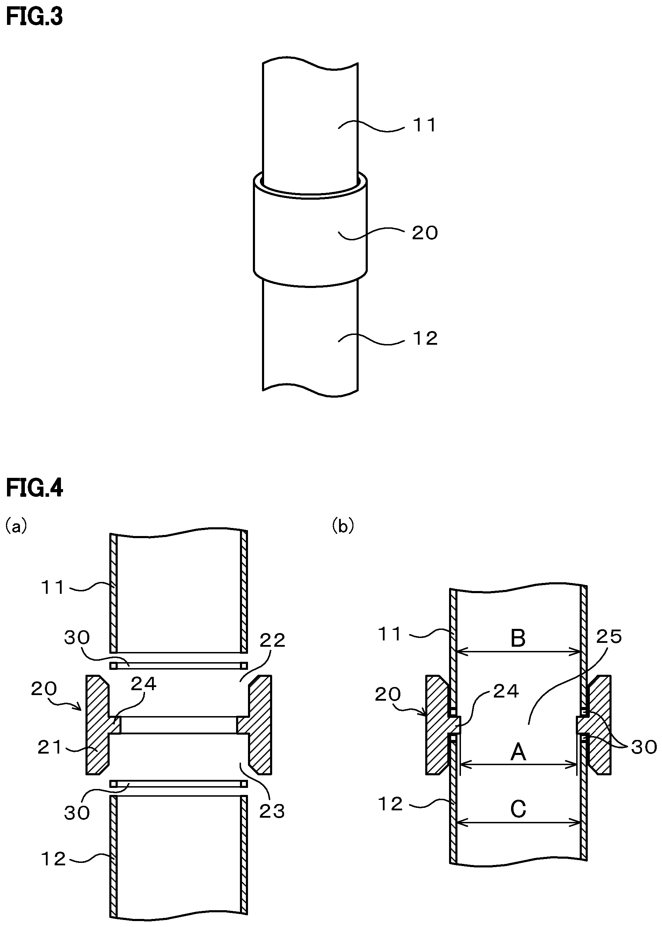

FIG. 3 is a perspective view illustrating the connection portion of the first reaction tube 11 and the second reaction tube 12. FIG. 4 is a view for explaining the connection structure of the first reaction tube 11 and the second reaction tube 12. FIG. 4(a) is an exploded view of the connection structure and illustrates a cross section when the connection portion of the reaction tubes 11 and 12 is cut along the vertical direction. FIG. 4(b) is a view illustrating a connection state of the first reaction tube 11 and the second reaction tube 12 and illustrates end surfaces when the connection portion of the reaction tubes 11 and 12 is cut along the vertical direction.

Between the lower end portion of the first reaction tube 11 and the upper end portion of the second reaction tube 12, a connection holder 20 is provided as a connection member connecting the first reaction tube 11 and the second reaction tube 12.

The connection holder 20 has a cylindrical side wall part 21, a first insertion port 22 into which the end portion of the first reaction tube 11 is inserted, and a second insertion port 23 into which the second reaction tube 12 is inserted.

The inside diameter of the side wall part 21 is slightly larger than the outside diameter of each reaction tube 11, 12, and an outer peripheral surface of the end portion of each reaction tube 11, 12 inserted into the connection holder 20 is supported by an inner peripheral surface of the side wall part 21.

Between the first insertion port 22 and the second insertion port 23, an intermediate wall part 24 projecting inward from the inner peripheral surface of the side wall part 21 is provided. The intermediate wall part 24 has an upper surface (first surface) which faces the lower end surface of the first reaction tube 11 and is parallel to the lower end surface, and a lower surface (second surface) which faces the upper end surface of the second reaction tube 12 and is parallel to the upper end surface. The intermediate wall part 24 is located at a central portion of the side wall part 21 in the vertical direction. As long as the intermediate wall part 24 can support each reaction tube 11, 12, the position of the intermediate wall part 24 in the vertical position is not particularly limited.

At a radially central portion of the intermediate wall part 24, a through hole 25 penetrating along the tube axis direction of the first reaction tube 11 is formed. The diameter of the through hole 25 is smaller than the inside diameter of each reaction tube 11, 12, and thus the lower end surface of the first reaction tube 11 is supported by the upper surface of the intermediate wall part 24 and the lower surface of the intermediate wall part 24 is supported by the upper end surface of the second reaction tube 12.

Note that if the size of the through hole 25 is excessively small, the intermediate wall part 24 obstructs the flow of the raw material gas and may cause accumulation of the CNTs on the upper surface of the intermediate wall part 24, blockage of the through hole 25 by the CNTs, or the like. Therefore, the size of the through hole 25 is preferably as large as possible within a range where each reaction tube 11, 12 inserted into the connection holder 20 can keep its stable posture. Specifically, a diameter A of the through hole 25, an inside diameter B of the first reaction tube 11, and an inside diameter C of the second reaction tube 12 are preferably in a relation of A ≥ B = C.

The material of the above-explained connection holder 20 is not particularly limited as long as it is a material having heat resistance against the heating temperature during the CNT production, and, for example, carbon or silicon carbide (SiC) is applicable. Note that outside air can flow into the space 15 illustrated in FIG. 2 into which the shielding gas is supplied, so that when the purity of the shielding gas in the space 15 is low, the atmosphere in the space 15 contains oxygen. Therefore, for example, when the connection holder 20 is made of carbon, it becomes more likely to be oxidized when coming into contact with the oxygen which can be present in the space 15, under a high-temperature environment. On the other hand, when the connection holder 20 is made of silicon carbide, such oxidation is suppressed so that the life of the connection holder 20 can be prolonged.

Besides, for example, if the thermal expansion coefficient of the connection holder 20 is excessively small as compared with the thermal expansion coefficient of each reaction tube 11, 12, the expansion rate of each reaction tube 11, 12 is higher than that of the connection holder 20 at the temperature increase in the heating chamber. Therefore, each reaction tube 11, 12 can further expand in a state where the outer peripheral surface of each reaction tube 11, 12 is in contact with the inner peripheral surface of the side wall part 21 of the connection holder 20. Besides, for example, if the thermal expansion coefficient of the connection holder 20 is excessively large as compared with the thermal expansion coefficient of each reaction tube 11, 12, the contraction rate of the connection holder 20 at the temperature decrease in the heating chamber is higher than that of each reaction tube 11, 12. Therefore, the connection holder 20 can further contract in a state where the outer peripheral surface of each reaction tube 11, 12 is in contact with the inner peripheral surface of the side wall part 21 of the connection holder 20.

In any of the above cases, breakage of each reaction tube 11, 12 or the connection holder 20 may occur. Accordingly, the material of the connection holder 20 is preferably the material having substantially the same thermal expansion coefficient as the thermal expansion coefficient of each reaction tube 11, 12, and the material of the connection holder 20 and the material of each reaction tube 11, 12 are preferably the same material.

Between the lower end surface of the first reaction tube 11 and the upper surface of the intermediate wall part 24 and between the upper end surface of the second reaction tube 12 and the lower surface of the intermediate wall part 24, annular packing 30 is provided as a sealing material. The provision of the packing 30 suppresses leakage of the raw material gas from a gap between the first reaction tube 11 and the connection holder 20 or a gap between the second reaction tube 12 and the connection holder 20.

The material of the packing 30 is not particularly limited as long as it can ensure a desired sealing property, and, for example, a metal oxide and a carbon-based material, specifically, alumina and graphite are applicable. A part containing carbon may deteriorate due to contact with the raw material gas for the CNT under a high-temperature environment, but each reaction tube 11, 12 and the intermediate wall part 24 of the connection holder 20 are in close contact with each other, so that the packing 30 is in a state of being less likely to be exposed to a raw material gas atmosphere. Therefore, even if the packing 30 is formed of graphite, the stable sealing property can be ensured for a long time.

The packing 30 is formed of the material deformed due to a load and thereby expected to exhibit high sealing property. Further, in the case where the packing 30 has a layered structure made by layering a plurality of the materials, the sealing property further increases. As the layered structure, for example, a layered structure of a sheet-shaped graphite film is preferable.

Note that the packing 30 is provided both between the first reaction tube 11 and the intermediate wall part 24 and between the second reaction tube 12 and the intermediate wall part 24 in the example illustrated in FIG. 4, but if the required sealing property can be ensured, the packing 30 may be provided only at one of them. Besides, if the required sealing property can be ensured, the packing 30 does not need to be provided.

The connection structure of the first reaction tube 11 and the second reaction tube 12 has been explained above. Note that the shape of the connection holder 20 and the shape of the packing 30 are appropriately changed according to the horizontal cross sections of the reaction tubes 11 and 12.

### (Pressing mechanism)

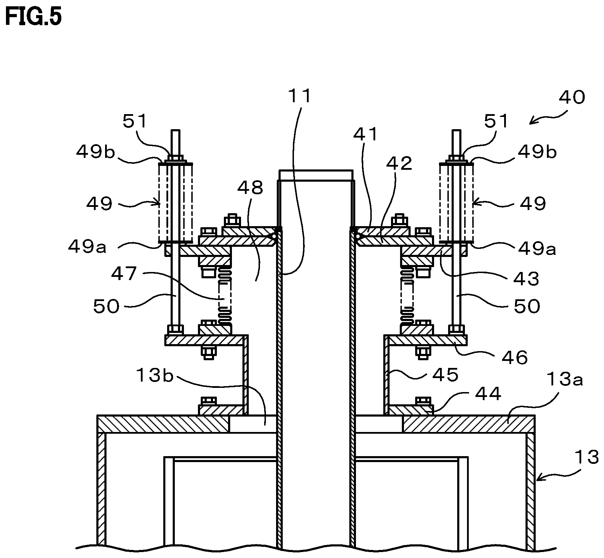

Next, a pressing mechanism 40 which is preferably provided in order to improve the sealing property of the connection portion of the first reaction tube 11 and the second reaction tube 12 will be explained. FIG. 5 is an explanatory view illustrating a schematic configuration of the pressing mechanism 40 which presses the first reaction tube 11 downward.

The pressing mechanism 40 has an annular plate material 41 fixed to the upper end portion of the first reaction tube 11 located outside the heating chamber 13, an annular plate material 42 fixed to a lower surface of the plate material 41, and an annular plate material 43 fixed to a lower surface of the plate material 42.

The pressing mechanism 40 further has an annular plate material 44 fixed to a ceiling wall part 13a of the heating chamber 13, a cylindrical wall part 45 fixed to an inner peripheral side end portion of the plate material 44, and an annular plate material 46 fixed to an upper end portion of the cylindrical wall part 45.

Between the plate material 43 and the plate material 46, a bellows 47 as a flexible member is provided. The bellows 47 is arranged in such a state that its expansion and contraction direction is parallel to the tube axis direction of the first reaction tube 11, and an upper end portion of the bellows 47 is fixed to the plate material 43, and a lower end portion of the bellows 47 is fixed to the plate material 46.

A periphery of the upper end portion of the first reaction tube 11 is surrounded by the plate materials 41 to 43, the cylindrical wall part 45, the plate material 46, and the bellows 47, whereby a space 48 is formed. To the space 48, for example, an inert gas is supplied from a not-illustrated shielding gas supply pipe, so that an inert gas atmosphere is formed in the space 48 at the production of the CNT. Further, the inert gas filled in the space 48 flows into the heating chamber 13 via a through hole 13b formed at the ceiling wall part 13a of the heating chamber 13 and is exhausted from a not-illustrated exhaust pipe (for example, the exhaust pipe 19 illustrated in FIG. 2). Note that a sealing material is provided as needed at a contact surface between the plate materials so as to able to suppress the leakage of the shielding gas from the space 48 to the outside.

During the temperature increase of the heating chamber 13, the first reaction tube 11 and the second reaction tube 12 extend along the tube axis direction by thermal expansion, in which case the bellows 47 also extends. On the other hand, during the temperature decrease of the heating chamber 13, the expanded first reaction tube 11 contracts so that the first reaction tube 11 contracts along the tube axis direction, in which case the bellows 47 also contracts.

Specifically, the bellows 47 extends or contracts according to the extension amount or the contraction amount of the first reaction tube 11, thereby making it possible to suppress the occurrence of the breakage of the parts such as the plate materials 41 to 43 directly or indirectly fixed to the upper end portion of the first reaction tube 11 and the reaction tubes 11 and 12 themselves at the thermal expansion or contraction of the first reaction tube 11.

Note that the pressing mechanism 40 preferably has the above structure in which the bellows 47 extends or contracts according to the change in length of the first reaction tube 11 in the tube axis direction, and the structure may be provided as a mechanism independent of the pressing mechanism 40.

Above the plate material 43 beside the bellows 47, a spring 49 is provided. The spring 49 is arranged such that its expansion and contraction direction is parallel to the tube axis direction of the first reaction tube 11, and a lower end portion 49a of the spring 49 is fixed to the upper surface of the plate material 43.

A bar material 50 is inserted into the spring 49, and the bar material 50 passes through the plate material 43 and is fixed at its lower end portion to an upper surface of the plate material 46. The bar material 50 is a hollow material such as a tube body, or a solid material. An upper end portion of the bar material 50 has been subjected to male threading, and a male threaded part has a nut 51 attached thereto.

A lower surface of the nut 51 is in contact with an upper end portion 49b of the spring 49 so that the upper end portion 49b of the spring 49 moves downward by fastening the nut 51 to cause the spring 49 to contract. Specifically, the upper end portion 49b of the spring 49 is in a state of being fixed to the bar material 50 by the nut 51. In other words, the spring 49 is located between the nut 51 and the plate material 43, and the upper end portion 49b of the spring 49 is fixed to the bar material 50 in a region on a side of the plate material 43 opposite to the second reaction tube 12 side.

A plurality of the above structures each composed of the spring 49, the bar material 50, and the nut 51 are provided. Here, when assuming that a member to which the lower end portion 49a being one end portion of the spring 49 is fixed is called a first member and a member to which the upper end portion 49b being the other end portion of the spring 49 is fixed is called a second member, the first member corresponds to the plate material 43 and the second member corresponds to the bar material 50.

The plate material 43 is fixed to the plate material 42 as explained above, the plate material 42 is fixed to the first plate material 41, and the first plate material 41 is fixed to the upper end portion of the first reaction tube 11. Specifically, the plate material 43 as the first member is in a state of being indirectly fixed to the upper end portion of the first reaction tube 11 via the other members.

On the other hand, the bar material 50 as the second member is fixed to the plate material 46. The plate material 46 is fixed to the cylindrical wall part 45, the cylindrical wall part 45 is fixed to the plate material 44, and the plate material 44 is fixed to the ceiling wall part 13a of the heating chamber 13. Specifically, the bar material 50 as the second member is in a state of being indirectly fixed to the heating chamber 13 via the other members.

The spring 49 fixed to the plate material 43 and the bar material 50 is fixed to the plate material 43 and the bar material 50, in a state of being contracted from a natural length by fastening of the nut 51. Therefore, a restoring force occurs in the spring 49 in the contraction state, but the bar material 50 to which the nut 51 is attached is fixed to the heating chamber 13 via the plate material 46, the cylindrical wall part 45, and the plate material 44, so that the bar material 50 is in a constraint state.

Accordingly, the restoring force of the spring 49 acts in a direction toward the lower end portion 49a of the spring 49 to apply a downward load to the upper surface of the plate material 43. The plate material 43 is fixed to the upper end portion of the first reaction tube 11 via the plate material 42 and the plate material 41, so that the downward load is input to the plate material 43 to press the first reaction tube 11 downward.

Accompanying this, the lower end surface of the first reaction tube 11 illustrated in FIG. 4 is pressed against the upper surface of the intermediate wall part 24 of the connection holder 20, and the lower surface of the intermediate wall part 24 is pressed against the upper end surface of the second reaction tube 12. This can increase the close contact property between the lower end surface of the first reaction tube 11 and the upper surface of the intermediate wall part 24 and the close contact property between the lower surface of the intermediate wall part 24 and the upper end surface of the second reaction tube 12 to improve the sealing property by the packing 30.

Note that the contraction amount of the spring 49 can be adjusted by a fastening pressure of the nut 51, but if the fastening pressure of the nut 51 is too large, an extension action of the bellows 47 is obstructed. Therefore, the fastening pressure of the nut 51 is appropriately set also considering the extension action of the bellows 47, and is, for example, 6 to 50 MPa.

The pressing mechanism 40 for pressing the first reaction tube 11 downward has been explained above, but the pressing mechanism 40 is not limited to the configuration illustrated in FIG. 5. For example, the plate material 43 as the first member to which the one end portion of the spring 49 is fixed may be directly fixed to the first reaction tube 11. Similarly, the bar material 50 as the second member to which the other end portion of the spring 49 is fixed, may be directly fixed to the heating chamber 13.

Besides, for example, the bar material 50 arranged inside the spring 49 may be arranged outside the spring 49. In this case, by providing a plate material (not illustrated) coupling the upper end portion 49b of the spring 49 and the bar material 50, the upper end portion 49b of the spring 49 in a state of being contracted from the natural length can be fixed to the bar material 50. However, from the viewpoint of reducing the number of parts and reducing the size of the pressing mechanism 40, it is preferable to arrange the bar material 50 inside the spring 49.

A mechanism of adjusting the contraction amount of the spring 49 by rotation of the nut 51 is provided as needed, and this adjustment mechanism is not limited to the configuration using the nut 51.

Further, the pressing mechanism 40 is not limited to the configuration of pressing the first reaction tube 11 downward and may be a configuration of pressing, for example, the second reaction tube 12 upward. Specifically, the pressing mechanism 40 only needs to have a configuration which makes the first reaction tube 11 and the second reaction tube 12 relatively approach each other.

The CNT production apparatus 10 according to this embodiment has been explained above. In this CNT production apparatus 10, the first reaction tube 11 and the second reaction tube 12 are arranged in a straight line, in which state the lower end portion of the first reaction tube 11 and the upper end portion of the second reaction tube 12 are connected by the connection holder 20.

This makes it possible to sufficiently heat the raw material gas by the second reaction tube 12 to produce the CNT when the supply rate of the raw material gas to be supplied to the first reaction tube 11 is increased. Further, the flow path for the raw material gas longer than that in the case of one reaction tube facilitates the control of the inside of each reaction tube 11, 12 to the treatment condition suitable for the production of the CNT even when the supply rate of the raw material gas is increased, to keep the quality of the CNT. Therefore, the CNT production apparatus 10 according to this embodiment can increase the CNT production amount per unit time while ensuring the quality of the CNT.

Note that though the connection holder 20 is provided in the above embodiment, the first reaction tube 11 and the second reaction tube 12 may be connected without providing the connection holder 20 as will be explained below.

### (Other examples of the connection structure)

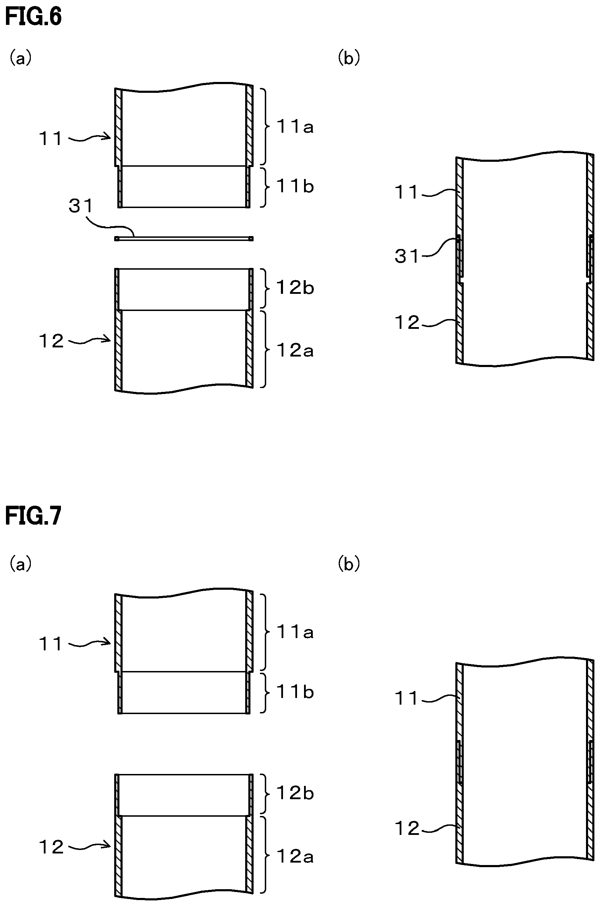

Hereinafter, other examples of the connection structure will be explained with reference to FIG. 6 to FIG. 8. (a) in each drawing is an exploded view of the connection structure and illustrates a cross section when cutting along the vertical direction the connection portion of the reaction tubes 11 and 12. Further, (b) in each drawing is a view illustrating the connection state of the first reaction tube 11 and the second reaction tube 12 and illustrates the end surfaces when cutting along the vertical direction the connection portion of the reaction tubes 11 and 12.

FIG. 6 is a view illustrating a connection structure of the reaction tubes 11 and 12 subjected to stepped machining at the end portions. As illustrated in FIG. 6, the lower end portion of the first reaction tube 11 is composed of a first outside diameter part 11a and a tubular second outside diameter part 11b smaller in outside diameter than the first outside diameter part 11a, and the second outside diameter part 11b is located below the first outside diameter part 11a. On the other hand, the upper end portion of the second reaction tube 12 is composed of a first inside diameter part 12a and a tubular second inside diameter part 12b smaller in inside diameter than the first inside diameter part 12a, and the second inside diameter part 12b is located above the first inside diameter part 12a. When the first reaction tube 11 and the second reaction tube 12 are connected, the second outside diameter part 11b is inserted inside the second inside diameter part 12b.

Between a lower end surface of the first outside diameter part 11a and the first inside diameter part 12a, annular packing 31 is provided as a sealing material. The material of the packing 31 is the same material as that of the packing 30 explained in the above embodiment.

In the connection structure illustrated in FIG. 6, the packing 31 is not exposed to an inner peripheral surface side of each reaction tube 11, 12 through which the raw material gas passes, so that the deterioration of the packing 31 can be suppressed. Further, when applying the above pressing mechanism 40 to this connection structure, the sealing property can be improved.

Note that when the outside diameter and the inside diameter of the first outside diameter part 11a and the outside diameter and the inside diameter of the first inside diameter part 12a are the same as the outside diameters and the inside diameters of the reaction tubes 11, 12 illustrated in FIG. 4, the area of the packing 31 has to be made smaller than the area of the packing 30. Therefore, in terms of the sealing property, the structure in which the connection holder 20 illustrated in FIG. 4 is provided is superior in sealing property.

FIG. 7 is an example in which the packing 31 is not provided in the connection structure illustrated in FIG. 6. In this example, between the outer peripheral surface of the second outside diameter part 11b and the inner peripheral surface of the second inside diameter part 12b, a liquid sealing agent is applied, which bonds the second outside diameter part 11b and the second inside diameter part 12b. Therefore, the connection structure of the reaction tubes 11 and 12 illustrated in FIG. 7 is superior in sealing property. Further, this connection structure is a structure in which the sealing material such as the packing is not provided, so that the above pressing mechanism 40 is unnecessary and the structure of the CNT production apparatus 10 can be simplified.

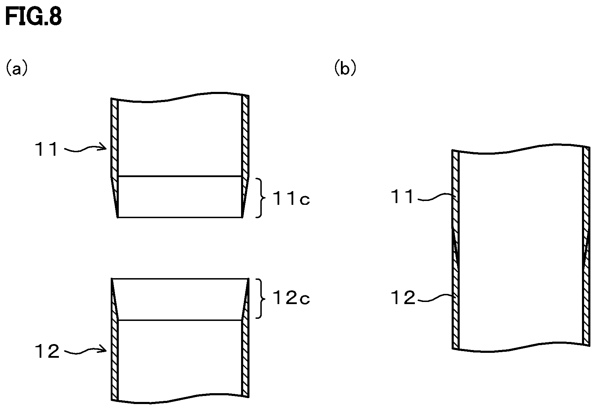

FIG. 8 is a view illustrating a connection structure of the reaction tubes 11 and 12 subjected to taper machining at the end portions. As illustrated in FIG. 8, the lower end portion of the first reaction tube 11 is formed with a first tapered part 11c which gradually decreases in outside diameter downward, and the upper end portion of the second reaction tube 12 is formed with a second tapered part 12c which gradually increases in inside diameter upward.

The first reaction tube 11 and the second reaction tube 12 are connected by inserting the first tapered part 11c into the second tapered part 12c. The outer peripheral surface of the first tapered part 11c and the inner peripheral surface of the second tapered part 12c are bonded together by applying the liquid sealing agent. Therefore, the connection structure of the reaction tubes 11 and 12 illustrated in FIG. 8 is superior in sealing property. Further, this connection structure is a structure in which the sealing material such as the packing is not provided, so that the above pressing mechanism 40 is unnecessary and the structure of the CNT production apparatus 10 can be simplified.

Note that end processing of the reaction tubes 11 and 12 is necessary in each of the examples illustrated in FIG. 6 to FIG. 8, but the end processing is unnecessary in the case of providing the connection holder 20 illustrated in FIG. 4. Specifically, the connection structure using the connection holder 20 is a structure advantageous also from the viewpoint of the cost reduction because, for example, commercially available tube bodies not subjected to the end processing can be used as they as the reaction tubes 11 and 12.

### (Regarding the tube axis direction of the reaction tube)

The tube axis direction of each reaction tube 11, 12 is the vertical direction in the above example, but the tube axis direction may be the horizontal direction or another direction. In the case where the tube axis direction is other than the vertical direction, for example, the "upper end portion of the first reaction tube 11" is read as an "end portion of the first reaction tube 11 on a side opposite to the second reaction tube 12 side", the "lower end portion of the first reaction tube 11" is read as an "end portion of the first reaction tube 11 on the second reaction tube 12 side", the "upper end portion of the second reaction tube 12" is read as an "end portion of the second reaction tube 12 on the first reaction tube 11 side", and the "lower end portion of the second reaction tube 12" is read as an "end portion of the second reaction tube 12 on a side opposite to the first reaction tube 11 side", whereby the CNT production apparatus having the operation and effect equivalent to those of the CNT production apparatus 10 explained in the above example can be obtained.

Although the embodiments of the present invention have been explained above, the present invention is not limited to such examples. It should be understood that various changes or modifications are readily apparent to those skilled in the art within the scope of the technical spirit as set forth in claims, and those should also be covered by the technical scope of the present invention.

For example, the configuration requirements of the above embodiments can be arbitrarily combined. From the arbitrary combination, the operations and effects about the configuration requirements relating to the combination can be naturally obtained, and other operations and other effects apparent to those skilled in the art are obtained from the description herein.

### EXAMPLES

In the CNT production apparatus according to an example of the present invention, a performance test was carried out for evaluating the airtightness of the connection portion of the first reaction tube and the second reaction tube.

The CNT production apparatus according to the example has the structure illustrated in FIG. 2 to FIG. 4 in which the first reaction tube and the second reaction tube are connected by the connection holder. The length of each of the reaction tubes is 1 m. Further, the packing is provided as the sealing material at each of the lower end surface of the first reaction tube and the upper end surface of the second reaction tube. Around each of the reaction tubes, a supply space for the shielding gas is formed, and a heater is installed in the space.

In the CNT production apparatus with the above structure, the temperature of the heater was set to 1200°C and a hydrogen gas as the carrier gas was supplied from the upper end of the first reaction tube at a flow rate of 50 L/min. The internal pressure (gauge pressure) of the reaction tube and the hydrogen concentration in the supply space for the shielding gas at this time were measured, and the airtightness of the reaction tube was evaluated.

Further, in an apparatus having a structure in which one reaction tube of 2 m was installed in place of the above first reaction tube, second reaction tube, and connection holder as the conventional CNT production apparatus, a performance test was carried out under the temperature condition and the gas supply condition similar to those in the example.

As a result of the above performance test, the internal pressure of the reaction tube was 0 to 2 kPaG and the hydrogen concentration in the supply space for the shielding gas was 0 ppm in both of the CNT apparatus according to the example and the CNT apparatus according to a comparative example. Specifically, even the CNT production apparatus having the structure in which the first reaction tube and the second reaction tube are connected has the airtightness equivalent to that of the conventional CNT production apparatus with a single tube structure and can perform the production process of the CNT.

Besides, the effects explained herein are merely explanatory or illustrative in all respects and not restrictive. In other words, the technique relating to this disclosure can offer other effects apparent to those skilled in the art from the description herein in addition to or in place of the above effects.

### INDUSTRIAL APPLICABILITY

The present invention is applicable to a carbon nanotube production apparatus.

### EXPLANATION OF CODES

- 1: CNT manufacturing apparatus (carbon nanotube manufacturing apparatus)
- 10: CNT production apparatus (carbon nanotube production apparatus)
- 11: first reaction tube
- 12: second reaction tube
- 13: heating chamber
- 13a: ceiling wall part
- 13b: through hole
- 14: heat insulating material
- 15: space
- 16: heater
- 17: thermocouple
- 18: shielding gas supply pipe
- 19: exhaust pipe
- 20: connection holder
- 21: side wall part
- 22: first insertion port
- 23: second insertion port
- 24: intermediate wall part
- 25: through hole
- 30: packing
- 40: pressing mechanism
- 41: plate material
- 42: plate material
- 43: plate material
- 44: plate material
- 45: cylindrical wall part
- 46: plate material
- 47: bellows
- 48: space
- 49: spring
- 49a: lower end portion of spring
- 49b: upper end portion of spring
- 50: bar material
- 51: nut
- 60: CNT collection apparatus (carbon nanotube collection apparatus)
- 61: collection room
- 62: roller
- 63: motor

## Claims

1. A carbon nanotube production apparatus for producing a carbon nanotube, the carbon nanotube production apparatus comprising:
a first reaction tube to which a raw material gas for the carbon nanotube is supplied;
a second reaction tube through which the raw material gas passes; and
a heating chamber which heats the first reaction tube and the second reaction tube, wherein:
the first reaction tube and the second reaction tube are arranged in a straight line; and
an end portion of the first reaction tube and an end portion of the second reaction tube are connected.

2. The carbon nanotube production apparatus according to claim 1, further comprising
a connection member which connects the end portion of the first reaction tube and the end portion of the second reaction tube, wherein:
the connection member comprises:
a first insertion port into which the end portion of the first reaction tube is inserted;
a second insertion port into which the end portion of the second reaction tube is inserted; and
an intermediate wall part provided between the first insertion port and the second insertion port,
the intermediate wall part comprising:
a first surface which faces an end surface of the first reaction tube and is parallel to the end surface;
a second surface which faces an end surface of the second reaction tube and is parallel to the end surface; and
a through hole which penetrates along a tube axis direction of the first reaction tube.

3. The carbon nanotube production apparatus according to claim 2, further comprising
a sealing material which is provided between the end surface of the first reaction tube and the intermediate wall part and/or between the end surface of the second reaction tube and the intermediate wall part.

4. The carbon nanotube production apparatus according to claim 1, wherein:
an end portion of the first reaction tube on the second reaction tube side has a first outside diameter part and a tubular second outside diameter part smaller in outside diameter than the first outside diameter part;
an end portion of the second reaction tube on the first reaction tube side has a first inside diameter part and a tubular second inside diameter part larger in inside diameter than the first inside diameter part; and
the second outside diameter part is inserted inside the second inside diameter part.

5. The carbon nanotube production apparatus according to claim 4, further comprising
a sealing material provided between an end surface of the first outside diameter part and an end surface of the second inside diameter part.

6. The carbon nanotube production apparatus according to claim 3, wherein
the sealing material is formed of graphite.

7. The carbon nanotube production apparatus according to claim 3, further comprising
a pressing mechanism which makes the first reaction tube and the second reaction tube relatively approach each other to bring the first reaction tube and the second reaction tube into close contact with each other via the sealing material.

8. The carbon nanotube production apparatus according to claim 7, wherein:
an end portion of the first reaction tube on a side opposite to the second reaction tube side is located outside the heating chamber; and
the pressing mechanism comprises:
a spring which expands and contracts in a direction parallel to the tube axis direction of the first reaction tube;
a first member to which one end portion of the spring is fixed; and
a second member to which another end portion of the spring is fixed,
the first member being fixed to the first reaction tube,
the second member being fixed to the heating chamber, and
the spring, in a state of being contracted from a natural length, being fixed to the second member in a region on a side opposite to a region on the second reaction tube side with respect to the first member.

9. The carbon nanotube production apparatus according to claim 8, wherein
the second member is a bar material inserted into the spring.

10. The carbon nanotube production apparatus according to claim 8, further comprising
an adjustment mechanism which adjusts a contraction amount of the spring.

11. The carbon nanotube production apparatus according to claim 9, wherein:
the bar material has a male threaded part;
a nut is attached to the male threaded part;
the spring is arranged between the nut and the first member; and
a configuration which is capable of adjusting a contraction amount of the spring by rotation of the nut is provided.

12. The carbon nanotube production apparatus according to claim 1, wherein
each of an end surface of the first reaction tube and an end surface of the second reaction tube at a connection portion of the first reaction tube and the second reaction tube has an arithmetic mean roughness Ra of 0.2 to 6.3 µm.
